# EUROPEAN PATENT SPECIFICATION

(11) **EP 3 007 195 B1**
(45) Date of publication and mention of the grant of the patent: **11.09.2019**
(21) Application number: 15187964.0
(22) Date of filing: 01.10.2015
(51) Int. Cl.: H01H 9/02, H01H 9/16, H05B 37/02, H01H 71/00

(54) **PROGRAMMABLE SWITCH**
PROGRAMMIERBARER SCHALTER
COMMUTATEUR PROGRAMMABLE

(30) Priority: 10.10.2014 IT TO20140812
(43) Date of publication of application: 13.04.2016
(60) Divisional application: 19189300.7
(73) Proprietor: Finder S.P.A., 10040 Almese (TO) (IT)
(72) Inventor: LA ROTONDA, Remo, 10040 Almese (TO) (IT)
(74) Representative: Robba, Pierpaolo

(56) References cited:
- WO-A1-2013/115147
- WO-A2-2013/003804
- CN-U- 202 261 429
- US-A1- 2012 315 848
- US-A1- 2014 170 971

## Description

### Technical Field

The present invention relates to a programmable switch for use in electrical equipments.

Preferably, though not exclusively, the invention relates to time switches or astronomical switches, timers, chronothermostats and the like, and the following description shall refer especially to this application.

### Prior Art

In the field of programmable switches it is known to use joysticks and displays for programming the switches upon their installation.

The known programmable switches allow to program, for instance the switching on-off time of utilities connected thereto, for example of lighting devices, and to program variation thereof depending on the date or other parameters.

However, the devices of the aforementioned kind have some drawbacks.

One drawback is that the programming interface or the display may be difficult to access, thus making it little easy for the installing personnel to handle them during programming of the switch.

A further drawback lies in the fact that the programming step takes a long time for manually inputting data, thus making it difficult to input numerous data or data which change their value quickly over time.

These drawbacks are usually overcome by using programmable keys, which, once they are introduced into a suitable slot of the product, transfer thereto a setting and a programming previously stored in the key.

In order to effect such programming it is necessary to use a programming device, which in turn has to be connected to a PC or tablet though a USB or wireless connection.

Both the programmable switches providing for a manual loading of data and those programmable by key have some limitations.

A first limitation is posed by the fact that the switch needs be powered, either by power network or by battery, during the programming.

Another limitation is given by the impossibility, for these switches, to have a traceability and an automated data collection of the product (e.g. the place of installation, the time of installation, any changes of the set program, the time remaining until the expected life end of the product and/or of its battery), or at least the data can only be collected through documental recording by the installer.

US 2014170971 discloses a system and method for providing information to and/or obtaining information from a programmable electronic component through an NFC communication interface provided with a memory. WO 2013/003804 discloses a method for programming a load control device using a smartphone through an NFC interface. These systems and methods however are not free from errors when providing to the user information on the current settings implemented into the component through the NFC interface.

Document WO 2013/115147 A1 discloses an antenna apparatus for e.g. tablet-type terminal of e.g. UHF band communication system, having printed wiring board whose surface layer or inner layer is equipped with a ground conductor and a feed coil coupled to a loop-form coupling portion of the ground conductor .

Document CN 202 261 429 U discloses a printed circuit board used in a mobile phone, wherein a near field communication module and an antenna connected to the near field communication module are arranged on the printed circuit board . The NFC (Near field communication) antenna is integrated on the outline edge of the PCB (Printed Circuit Board) .

### Summary of the Invention

It is an object of the present invention to provide a programmable switch having an NFC chip allowing setting and programming thereof by means of a mobile device (smartphone o tablet) equipped with NFC connection and dedicated APP.

Another object of the present invention is to allow recording, on a database managed by said dedicated APP, of the data referred to the switch, by storing localization data, serial number, installation date, any re-programmings, thus allowing to make a "history" of the programmable switch available to the manufacturing company, such history being usable for purposes of activation and product warranty check, traceability, maintenance forecasting (for instance for replacing the back-up battery) etc.

A further object of the present invention is to allow easy, quick and safe programming of the switch at the time of manufacturing and product inspection.

A further object of the present invention is to allow copying of a resident program on a programmable switch and easy duplication of the same on other switches.

These and other objects are achieved by the present invention by providing a programmable switch according to claim 1.

It is understood that the appended claims form an integral part of the technical teachings provided herein in the present description of the invention.

### Brief Description of the Drawings

Further features and advantages of the invention will become more apparent from the ensuing detailed description, given merely by way of non-limiting example, with reference to the annexed drawings, in which:
- Figure 1 is a block diagram of an embodiment of a programmable switch according to the present invention; and
- Figure 2 is a perspective view of an embodiment of the printed circuit board with integrated antenna of a programmable switch according to the present invention.

### Description of Preferred Embodiments

Referring to the Figures, there is illustrated an exemplary embodiment of a programmable switch for use in electrical equipments and a method for programming the same.

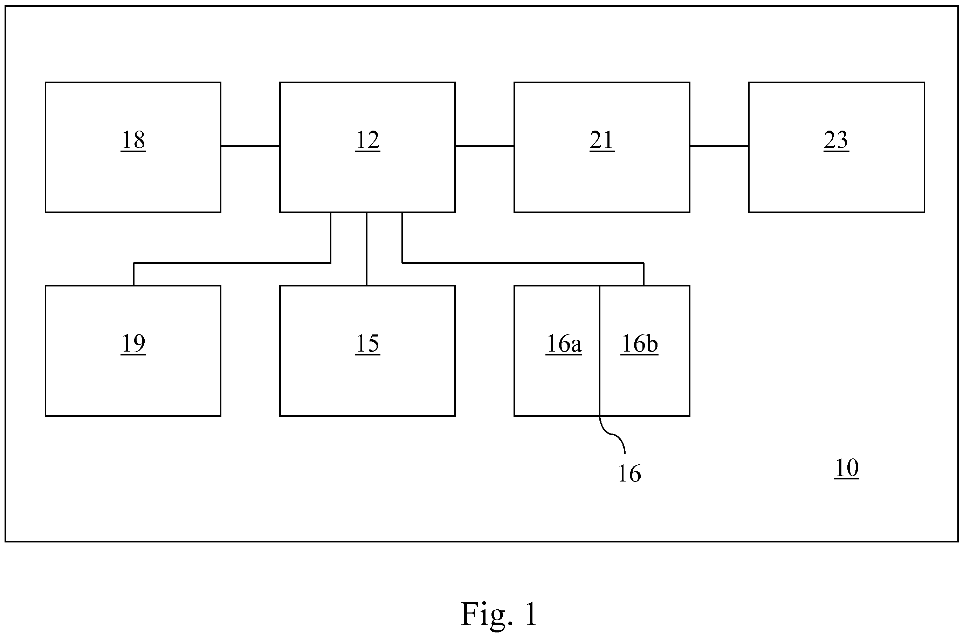

Referring to Figure 1, the programmable switch according to the invention, designated as a whole by reference numeral 10, comprises an electronic microcontroller 12 associated, preferably electrically connected, to a storage unit 15, that can be either internal or external to the microcontroller itself, to a communication module of the NFC ("Near Field Communication") type 16, to a programming interface 18 and to a display 19. The programmable switch 10 is further provided with a switch 21 for controlling the opening and closing of an electrical circuit, wherein said switch may preferably comprise a relay 23 which is connected to the supply circuit of the utility or utilities the switching on/off of which is to be controlled by means of the switch.

The switch 10 is programmable both through the interface 18 and through the NFC communication module 16 with which it is provided.

The known interface 18, for example of the type provided with buttons, having a touch-screen and a joystick, allows the loading of data by an operator into the storage unit 15.

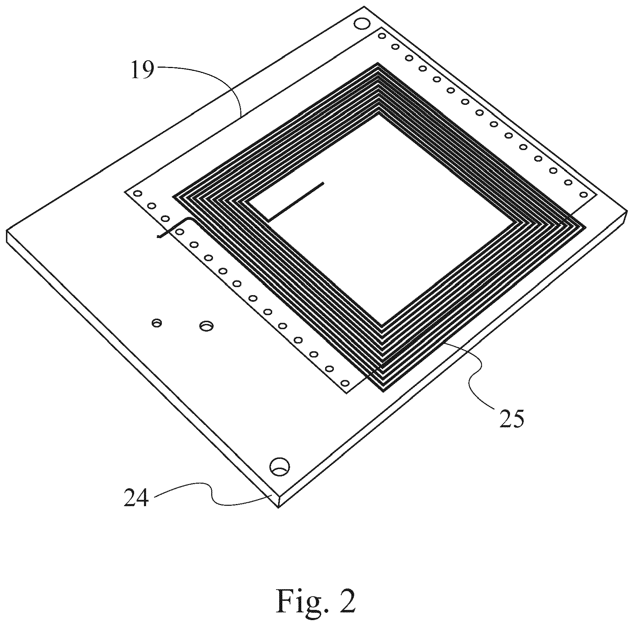

The NFC communication module 16 of the programmable switch 10 according to the invention comprises a wireless communication module 16a which integrates an antenna 25 shown in Figure 2, and an NFC memory buffer 16b, which can be written and/or read both by the electronic microcontroller 12 and by an external device, for instance a smartphone, this too being provided with an NFC communication module.

The electronic microcontroller 12 is programmed by means of suitable instructions so as to properly read the data loaded in the storage unit 15, which can be loaded through the interface 18 or through the NFC memory buffer 16b, as will be explained in more detail below.

The programmable switch 10 of the invention further comprises a printed circuit board 24, shown in Figure 2, to which the display 19, the electronic microcontroller 12, the storage unit 15, the NFC communication module 16 and the programming interface 18 are connected.

The printed circuit board 24 is a multilayer circuit and comprises the antenna 25 of the NFC communication module 16.

The antenna 25 is made in a known manner in the form of a squared spiral, with the inner diagonal proportional to the transmission distance.

In order to facilitate transmission, the antenna 25 is arranged close to the upper side of the printed circuit board 24, which is arranged in proximity to the outward-facing side of the printed circuit board 24 of the switch 10, when the switch 10 is installed, so as to allow the external device provided with NFC communication module to be brought close to the antenna for programming the switch 10.

In a first embodiment of the switch 10 which is not part of the invention, usable when there are no space limitations, the preferred arrangement of the antenna 25 is on the upper side of the printed circuit board 24, next to the display.

In an embodiment of the switch 10 according to the invention, in which it is desired to provide a small-sized switch, the antenna 25 is formed in an inner layer of a multilayer circuit, in the layer immediately below the upper side on which the display 19 is mounted.

In an alternative embodiment of the switch 10 according to the invention, the antenna is a radial inductor of known type having a suitable value.

The operation of the programmable switch 10 according to the invention is as follows.

An NFC module contained in an external device of the switch 10, for instance contained in a smartphone, is put in communication with the wireless communication module 16a of the programmable switch 10 by means of an application "APP" installed on the smartphone and writing data, for example date, time, geographical position, programmed switch-on or switch-off time, in certain sectors of the NFC memory buffer 16b; the electronic microcontroller 12 processes the data stored in the NFC memory buffer 16b and updates the data stored in the storage unit 15 connected thereto by means of serial or parallel communication.

The electronic microcontroller 12 periodically checks the presence of a data update command, activated through the smartphone application, in the NFC memory buffer 16b. When the microcontroller 12 finds the data update command, the microcontroller interprets the command and updates the internal memory 15, adapts the operation mode of the programmable switch 10 to one of the operation modes provided (daily or weekly, manual or automatic etc.), and compiles a return buffer provided in the NFC communication module 16 for the APP containing information about carried out operations (programming, localizing, recording, copying, reading etc.) so that the smartphone can read it.

Each parameter varied by the programming interface 18 compiles the return buffer of the NFC communication module 16 for the APP.

The device arranged externally to the switch 10, for example the smartphone, transfers the data to the NFC memory buffer 16b without the need for additional energy, and therefore also when the switch is disconnected from the power network and has no battery or when the battery is flat.

During the programming step on the APP it is possible to avoid manual setting of the date, time and geographical position data by exploiting the values present on the smartphone itself thanks to its connection to the power network and to the inbuilt GPS sensor. These are the last data that are taken by the APP before starting writing the NFC memory buffer 16b, so as to minimize the synchronization error.

It is as well possible, when it is desired to program devices intended for being installed in locations having different geographical positions and possibly different time zones, to manually set such data or have them re-calculated by the APP itself.

Advantageously, the programmable switch 10 according to the present invention allows to effect recording, on a database managed by said dedicated APP, the data concerning the switch, by storing localization data, serial number, installation date, any re-programmings, thus allowing to make a "history" of the programmable switch available to the manufacturing company, such history being usable for purposes of activation and product warranty check, traceability, maintenance forecasting (for instance for replacing the back-up battery) etc..

A further advantage of the programmable switch 10 according to the present invention lies in the fact that it allows easy, quick and safe programming of the switch at the time of manufacturing and product inspection.

Ad advantage of the programmable switch 10 according to the present invention is that it allows copying of a resident program on a programmable switch and easy duplication of the same on other switches.

A further advantage of the programmable switch 10 according to the present invention is the following: owing to the little energy that the NFC chip can receive from the transmission by the smartphone, it can transfer stored data without the need for additional energy, even when the switch is disconnected from the power network or has not battery or the battery is flat.

Of course embodiments and embodiment details may be widely varied with respect to what has been described and illustrated merely as a non-limiting example, without departing from the scope of the present invention as defined in the appended claims.

## Claims

1. Programmable switch (10) comprising:
- an electronic microcontroller (12) associated to a storage unit (15), to a programming interface (18) and to a display (19);
- a switch (21) for controlling the opening and closing of an electrical circuit connected thereto;
wherein the programmable switch (10) comprises an NFC communication module (16) associated to said electronic microcontroller (12), and wherein the switch (10) is programmable by loading data into the storage unit (15) by using both the programming interface (18) and the NFC communication module (16), wherein the NFC communication module (16) comprises a wireless communication module (16a) which integrates an antenna (25), and an NFC memory buffer (16b) adapted to be written and/or read by both the electronic microcontroller (12) and an external device equipped with an NFC communication module
**characterised in that** the switch further comprises a printed circuit board (24) to which the display (19), the electronic microcontroller (12), the storage unit (15), the NFC communication module (16) and the programming interface (18) are connected, wherein said printed circuit board (24) comprises the antenna (25) of the NFC communication module (16), wherein the printed circuit board (24) is a multilayer circuit and the antenna (25) is formed in an inner layer of said printed circuit board (24), in the layer immediately below the upper side on which the display (19) is mounted.

2. Programmable switch (10) according to claim 1, **characterized in that** the antenna (25) is made in the form of a squared spiral, with the inner diagonal proportional to the transmission distance.

3. Programmable switch (10) according to any one of claims 1 or 2, **characterized in that** the antenna is a radial inductor.

## Patentansprüche

1. Programmierbarer Schalter (10) mit:
- einem elektronischen Mikrokontroller (12), der einer Speichereinheit (15), einer Programmierschnittstelle (18) und einer Anzeige (19) zugeordnet ist,
- einem Schalter (21) zum Steuern des Öffnens und Schließens eines daran angeschlossenen elektrischen Stromkreises,
wobei der programmierbare Schalter (10) ein NFC Kommunikationsmodul (16) aufweist, das dem elektronischen Mikrokontroller (12) zugeordnet ist, und wobei der Schalte (10) programmierbar ist, indem Daten durch Verwendung sowohl der Programmierschnittstelle (18) als auch des NFC Kommunikationsmoduls (16) in die Speichereinheit (15) geladen werden, wobei das NFC Kommunikationsmodul (16) ein drahtloses Kommunikationsmodul (16a), das eine Antenne (25) enthält, und einen NFC Pufferspeicher (16b) aufweist, der dafür ausgelegt ist, sowohl von dem elektronischen Mikrokontroller (12) als auch einer externen Vorrichtung, die mit einem NFC Kommunikationsmodul versehen ist, beschrieben und/ oder gelesen zu werden,
**dadurch gekennzeichnet, dass**
der Schalter zudem eine bedruckte Leiterplatte (24) aufweist, an die die Anzeige (19), der elektronischen Mikrokontroller (12) die Speichereinheit (15), des NFC Kommunikationsmodul (16) und die Programmierschnittstelle (18) angeschlossen sind, wobei die gedruckte Leiterplatte (24) die Antenne (25) des NFC Kommunikationsmoduls (16) aufweist, wobei die gedruckte Leiterplatte (24) ein mehrlagiger Schaltkreis ist und die Antenne (25) in einer inneren Schicht der gedruckten Leiterplatte (24) gebildet ist, in der Schicht, die unmittelbar unter der Oberseite liegt, auf der die Anzeige (19) montiert ist.

2. Programmierbarer Schalter (10) nach Anspruch 1, **dadurch gekennzeichnet, dass** die Antenne (25) in Form einer rechteckigen Spirale ausgebildet ist, wobei die innere Diagonale proportional zu der Übertragungsdistanz ist.

3. Programmierbarer Schalter (10) nach einem der Anspruche 1 oder 2, **dadurch gekennzeichnet, dass** die Antenne eine radiale Spule ist.

## Revendications

1. Commutateur programmable (10) comprenant :
- un microcontrôleur électronique (12) associé à une unité de stockage (15), à une interface de programmation (18) et à un afficheur (19) ;
- un commutateur (21) pour commander l'ouverture et la fermeture d'un circuit électrique connecté à celui-ci ;
dans lequel le commutateur programmable (10) comprend un module de communication NFC (16) associé audit microcontrôleur électronique (12), et dans lequel le commutateur (10) est programmable en chargeant des données dans l'unité de stockage (15) en utilisant à la fois l'interface de programmation (18) et le module de communication NFC (16), dans lequel le module de communication NFC (16) comprend un module de communication sans fil (16a) qui intègre une antenne (25), et une mémoire tampon NFC (16b) adaptée pour être écrite et/ou lue à la fois par le microcontrôleur électronique (12) et un dispositif externe équipé d'un module de communication NFC,
**caractérisé en ce que** le commutateur comprend en outre
une carte de circuit imprimé (24) à laquelle l'afficheur (19), le microcontrôleur électronique (12), l'unité de stockage (15), le module de communication NFC (16) et l'interface de programmation (18) sont connectés, dans lequel ladite carte de circuit imprimé (24) comprend l'antenne (25) du module de communication NFC (16), dans lequel la carte de circuit imprimé (24) est un circuit multicouche et l'antenne (25) est formée dans une couche interne de ladite carte de circuit imprimé (24), dans la couche immédiatement en dessous du côté supérieur sur lequel l'afficheur (19) est monté.

2. Commutateur programmable (10) selon la revendication 1, **caractérisé en ce que** l'antenne (25) est réalisée sous la forme d'une spirale carrée, la diagonale interne étant proportionnelle à la distance de transmission.

3. Commutateur programmable (10) selon l'une quelconque des revendications 1 ou 2, **caractérisé en ce que** l'antenne est un inducteur radial.
